# EUROPÄISCHE PATENTANMELDUNG

(11) **EP 4 592 167 A1**
(43) Veröffentlichungstag der Anmeldung: **30.07.2025**
(21) Anmeldenummer: 25152505.1
(22) Anmeldetag: 17.01.2025
(51) Int. Cl.: B62D 59/04

(54) **ANTRIEBSEINHEIT UND ANTRIEBSVERFAHREN**

(30) Priorität: 29.01.2024 DE 202024100433 U
(71) Anmelder: Alois Kober GmbH, 89359 Kötz (DE)
(72) Erfinder: Uhl, Stefan, 89312 GÜNZBURG (DE); Gutjahr, Pavel Villacis, 89356 HALDENWANG (DE); Zimmermann, Maximilian, 89522 HEIDENHEIM (DE)
(74) Vertreter: ERNICKE Patent- und Rechtsanwälte PartmbB

(57) **Zusammenfassung**

Die Erfindung betrifft eine Antriebseinheit (2) und ein Antriebsverfahren für einen Rangierantrieb (1) eines straßengängigen Fahrzeuganhängers (3), wobei die Antriebseinheit (2) eine Treibeinrichtung (8) aufweist, welche ein an ein Anhängerrad (7) des Fahrzeuganhängers (3) zustellbare, drehend angetriebene Treibrolle (9), einen beweglichen Rollenträger (11) und einen Rollenantrieb (10) umfasst, wobei der Rollenantrieb (10) einen Antriebsmotor (21) und ein mit der Treibrolle (9) verbundenes sowie vollständig oder zumindest überwiegend innerhalb der Treibrolle (9) angeordnetes Getriebe (23) aufweist. Der Antriebsmotor (21) ist außerhalb und getrennt von der Treibrolle (9) angeordnet und treibt die Treibrolle (9) über einen mit dem Getriebe (23) gekoppelten Zwischentrieb (27) an.

## Beschreibung

Die Erfindung betrifft eine Antriebseinheit und ein Antriebsverfahren für einen Rangierantrieb eines straßengängigen Fahrzeuganhängers mit den Merkmalen im Oberbegriff des Hauptanspruchs.

Eine solche Antriebseinheit ist aus der EP 2 208 661 A1 bekannt. Das Getriebe des Rollenantriebs ist in der hohlen Treibrolle angeordnet, wobei der Antriebsmotor koaxial zum Getriebe angeordnet ist und ebenfalls vollständig oder zumindest teilweise in der Treibrolle angeordnet ist.

Die EP 3 552 932 A1 zeigt eine andere Antriebseinheit für einen Rangierantrieb eines straßengängigen Fahrzeuganhängers, bei welcher der Antriebsmotor des Rollenantriebs und das Getriebe im wesentlichen außerhalb der Treibrolle angeordnet sind, wobei die Treibrolle einen einstückig angeformten inneren Zahnkranz aufweist, mit dem ein exzentrisch angeordnetes Abtriebsritzel des Getriebes kämmt.

Es ist Aufgabe der vorliegenden Erfindung, eine bessere Antriebseinheit nebst Verfahren für einen Rangierantrieb eines straßengängigen Fahrzeuganhängers aufzuzeigen.

Die Erfindung löst diese Aufgabe mit den Merkmalen in den selbständigen Ansprüchen.

Die beanspruchte Antriebseinheit und das Antriebsverfahren haben verschiedene Vorteile.

Die beanspruchte Antriebseinheit für einen Rangierantrieb eines straßengängigen Fahrzeuganhängers und das Antriebsverfahren können die im Oberbegriff genannte Basisausbildung haben. Die Antriebseinheit kann zumindest eine Treibeinrichtung aufweisen, welche ein an ein Anhängerrad des Fahrzeuganhängers zustellbare, drehend angetriebene Treibrolle, einen beweglichen Rollenträger und einen Rollenantrieb umfasst. Der Rollenantrieb kann einen Antriebsmotor und ein mit der Treibrolle verbundenes sowie vollständig oder zumindest überwiegend innerhalb der Treibrolle angeordnetes Getriebe aufweisen.

Die angetriebene Treibrolle kann mit dem Anhängerrad, z.B. mit der Lauffläche seines Reifens, in einen treibenden Eingriff gebracht werden und kann das Anhängerrad drehen. Dies ermöglicht ein motorisches Bewegen, insbesondere Rangieren, des straßengängigen Fahrzeuganhängers. Die Treibrolle kann hierfür einen treibgünstigen, z.B. außenseitig geriffelten, Rollenmantel aufweisen. Alternativ oder zusätzlich kann die Treibrolle mit einem anderen Teil eines Anhängerrads, z.B. einem Felgenkranz oder dgl., in einen treibenden Eingriff treten.

Der bevorzugt elektrische und steuerbare Antriebsmotor, z.B. Gleichstrommotor, des Rollenantriebs ist außerhalb und getrennt von der Treibrolle und von dem vollständig oder zumindest überwiegend innerhalb der Treibrolle befindlichen Getriebe angeordnet. Diese räumliche Trennung hat verschiedene Vorteile.

Einerseits können Dimension, Typ und Positionierung des bevorzugt am Rollenträger angeordneten Antriebsmotors gewählt und bedarfsweise variiert werden. Damit kann unterschiedlichen Erfordernissen, z.B. unterschiedlichen Antriebsmomenten und -leistungen je nach Anhängergewicht und Zahl der Anhängerachsen etc., Rechnung getragen werden. Andererseits ergeben sich thermische Vorteile. Die vom Antriebsmotor entwickelte Wärme kann vom Rollenträger aufgenommen und abgeleitet werden. Die Motorwärme kann vom Getriebe ferngehalten werden. Ferner kann der Bauraum im hohlen Innenraum der Treibrolle und am Rollenträger optimal ausgenutzt werden. Das Getriebe kann konzentrisch zur zylindrischen Treibrolle und bevorzugt vollständig in deren Innenraum angeordnet werden.

Ferner ergeben sich Vorteile für die stabile Abstützung und Lagerung der drehbaren Treibrolle und des Antriebsmotors. Insbesondere können die vom Anhängerrad ausgeübten Reaktionskräfte in der Anpress-und Treibstellung der Treibrolle besser aufgenommen werden.

Die Motorachse und die Getriebeachse sind ebenfalls getrennt voneinander angeordnet. Sie sind miteinander über den Zwischentrieb gekoppelt. Dies hat bautechnische Vorteile. Die Motorachse und die Getriebeachse können parallel und mit seitlichem Abstand angeordnet sein. Alternativ ist eine rechtwinklige oder schräge gegenseitige Ausrichtung der Motor- und Getriebeachse möglich. Der Bauraum in dem bevorzugt gehäuseartigen, hohlen Rollenträger kann optimal ausgenutzt werden.

Das Getriebe kann eine hohe Untersetzung zwischen der schnellen Antriebsdrehzahl des Antriebsmotors und der langsamen Abtriebsdrehzahl der Treibrolle bieten. Das Getriebe kann eine oder mehrere Stufen umfassen. Das Getriebe kann in unterschiedlicher Weise ausgebildet sein. Vorteilhaft ist eine Getriebeausbildung als Umlaufrädergetriebe, insbesondere als Planetengetriebe. Alternativ sind andere Getriebeformen möglich. Das Getriebe kann selbsthemmend oder ohne Selbsthemmung ausgebildet sein.

Der Zwischentrieb kann am Rollenträger angeordnet sein. Er kann im wesentlichen außerhalb der Treibrolle angeordnet sein. Der Zwischentrieb kann in unterschiedlicher Weise ausgebildet sein. Vorteilhaft ist eine Ausbildung als Riementrieb. Dies kann ein reibschlüssiger oder bevorzugt formschlüssiger Riementrieb, insbesondere ein Zahnriementrieb, sein. Der Zwischentrieb, insbesondere in der Ausbildung als Riementrieb, hat Vorteile für eine Vibrationsentkopplung zwischen Antriebsmotor und Getriebe. Ein Riemen kann dämpfende Eigenschaften haben.

Günstig ist außerdem die kleine Größe des beanspruchten Bauraums. Der Zwischentrieb, insbesondere der Riementrieb, kann platzsparend im bevorzugt gehäuseartigen Rollenträger, insbesondere in einem Trägerarm, untergebracht werden. Vorteilhaft ist außerdem, dass das Abtriebselement des Zwischentriebs, z.B. eine Riemenscheibe oder ein Zahnrad, einen geringeren Durchmesser als die bevorzugt koaxial hierzu angeordnete Treibrolle haben kann. Die Treibrolle kann in Zustellrichtung radial über den Rollenträger und dessen bevorzugt gabelarmige Trägerarme hinausragen. Der Rollenträger hat dadurch keine Störkontur bei der Zustellung der Treibrolle an das Anhängerrad.

Die Antriebseinheit kann eine steuerbare Bremseinrichtung mit Haltefunktion für die Treibrolle aufweisen. Dies hat besondere Vorteile bei einer Ausbildung des Getriebes ohne Selbsthemmung. Die Treibrolle kann in ihrer Anpressstellung am Anhängerrad fixiert werden und wirkt durch die Haltefunktion als Bremselement, welches eine unerwünschte Drehung des Anhängerrads blockiert. Die Bremseinrichtung kann zwischen dem Getriebe und dem Antriebsmotor an geeigneter Stelle angeordnet sein. Günstig ist eine Anordnung der Bremseinrichtung zwischen dem Getriebe und dem Zwischentrieb. Die Bremseinrichtung kann insbesondere innerhalb der hohlen Treibrolle angeordnet sein.

Die Treibrolle kann über zumindest ein Rollenlager, z.B. ein Wälzlager oder Gleitlager, am Rollenträger gelagert und abgestützt sein. Die Treibrolle kann außerdem intern drehbar auf einem trägerfesten Stützrohr gelagert sein. Die Treibrollenlagerung kann derart ausgebildet sein, dass eine Zwischenstufe des Getriebes am Rollenträger, insbesondere am Stützrohr, drehfest abgestützt werden kann.

Der Rollenträger kann ein hohles Trägergehäuse umfassen. In dem Trägergehäuse können der Antriebsmotor und vorzugsweise auch der Zwischentrieb angeordnet sein. Günstig ist eine Ausbildung des Rollenträgers mit gabelartigen Trägerarmen, zwischen denen die Treibrolle angeordnet ist. Sie kann über die gabelartigen Trägerarme auch vorteilhaft drehbar gelagert und gegen Reaktionskräfte vom Anhängerad abgestützt sein.

Die Antriebseinheit kann eine Zustelleinrichtung umfassen, welche die Treibeinrichtung bewegt und mitsamt der Treibrolle an das Anhängerrad zustellen und ggf. anpressen kann. Die Zustellbewegung und Zustellrichtung können translatorisch und/oder rotatorisch sein. Die Treibeinrichtung kann zwischen einer zurückgezogenen Ruhestellung und der Treibstellung am Anhängerrad hin und her bewegt werden. Dies kann mit Hand- oder Fußkraft oder mittels eines motorischen oder sonstigen Zustellantriebs erfolgen.

Günstig sind eine lineare Zustellfunktion und Ausbildung der Zustelleinrichtung. Vorteilhaft ist auch die Ausstattung der Zustelleinrichtung mit einem eigenen Zustellantrieb. Alternativ kann der Zustellantrieb vom Antriebsmotor der Treibeinrichtung abgeleitet sein. Die Zustelleinrichtung kann eine Konsole umfassen, an welcher der Rollenträger mit geeigneter Kinematik, bevorzugt linear, in einer Zustellrichtung verstellbar gelagert ist. Der Rollenträger kann mit dem Zustellantrieb in unterschiedlicher Weise gekoppelt sein. Der Zustellantrieb kann sich in oder an der Konsole oder in oder an der Treibeinrichtung befinden. Der Zustellantrieb kann z.B. einen steuerbaren elektrischen Antriebsmotor, insbesondere Gleichstrommotor, umfassen.

Die Konsole kann am Fahrzeuganhänger, insbesondere an dessen Chassis, befestigt werden und kann hierfür entsprechend ausgebildet sein. Vorteilhaft ist eine Befestigung der Konsole an einem Längsträger des Chassis, insbesondere an einem aufrechten Mittelsteg des Längsträgers. Alternativ oder zusätzlich ist eine Befestigung der Konsole an einem Querträger möglich, der seinerseits in geeigneter Weise mit dem oder den Längsträgern fest verbunden werden kann. Ein Querträger kann unterhalb der Längsträger angeordnet sein. Er kann auch durch die aufrechten Mittelstege der Längsträger durchgesteckt sein. In beiden Fällen kann der Querträger beidseits über die Längsträger vorstehen. In einer weiteren Variante kann der Querträger zwischen den Längsträgern angeordnet sein und über endseitige Platten an jeweils einem aufrechten Mittelsteg des Längsträgers anliegen sowie mit der Konsole fest verbunden, insbesondere verschraubt, sein.

Die Antriebseinheit kann eine Kommunikationsschnittstelle aufweisen, die zur Kommunikation mit mindestens einer Steuerung und/oder einer Fernbedienung des Rangierantriebs ausgebildet ist. Die Kommunikation kann leitungsgebunden und/oder drahtlos erfolgen. Die mindestens eine Steuerung kann eine zentrale Steuerung des Rangierantriebs oder eine verteilte Steuerung mit Steuermodulen an den Antriebseinheiten des Rangierantriebs sein. Von der Steuerung können der Antriebsmotor und der ggf. eigene Zustellantrieb der Antriebseinheit beaufschlagt werden. Die Antriebseinheit kann außerdem ein oder mehrere Sensoren, z.B. Temperatursensoren, Drehzahlsensoren, Wegsensoren, Kraftsensoren oder dgl. umfassen. Diese können ebenfalls mit der mindestens einen Steuerung kommunizieren. Von der Steuerung können die Fahrtrichtung und die Fahrgeschwindigkeit der Antriebseinheit gesteuert und ggf. geregelt werden.

Die beanspruchte Antriebseinheit kann Teil eines Rangierantriebs sein. Der Rangierantrieb kann zwei oder mehr, insbesondere vier, Antriebseinheiten umfassen. Hierbei können ein oder mehrere linke und ein oder mehrere rechte Antriebseinheiten vorhanden sein, die jeweils auf ein linkes und ein rechtes Anhängerrad eines einachsigen oder mehrachsigen straßengängigen Fahrzeuganhängers einwirken können. Die Steuerung kann gemäß Bedienervorgaben die Fahrtrichtungen und Fahrgeschwindigkeiten der Antriebseinheiten des Rangierantriebs derart einzeln und auch im Verhältnis untereinander steuern und ggf. regeln, dass der Rangierantrieb den Fahrzeuganhänger in die gewünschte Fahrtrichtung vorwärts/rückwärts, geradeaus und in wählbarer Kurvenfahrt bewegt sowie ggf. ein Wenden im Stand ermöglicht.

Die beschriebenen und beanspruchten Vorrichtungsmerkmale können mit Vorteil beim beanspruchten Verfahren eingesetzt werden. Umgekehrt können auch die beschriebenen und beanspruchten Verfahrensmerkmale vorteilhafterweise bei der/den beanspruchten Vorrichtung(en) eingesetzt werden.

Die beanspruchte Antriebseinheit und das Verfahren können folgende Ausgestaltungen haben, die jeweils einzeln oder in Kombination einsetzbar sind.

Die Antriebseinheit kann zumindest eine Treibeinrichtung aufweisen. Diese kann gesteuert beweglich und in Richtung auf ein Anhängerrad eines Fahrzeuganhängers zustellbar sein. Die Treibeinrichtung kann eine an ein Anhängerrad des Fahrzeuganhängers zustellbare, drehend angetriebene Treibrolle, einen beweglichen Rollenträger und einen Rollenantrieb umfassen. Der Rollenantrieb kann einen Antriebsmotor und ein mit der Treibrolle verbundenes sowie vollständig oder zumindest überwiegend innerhalb der Treibrolle angeordnetes Getriebe aufweisen. Der bewegliche Rollenträger kann in Richtung auf ein Anhängerrad eines Fahrzeuganhängers zustellbar sein.

Das Getriebe der Treibeinrichtung, insbesondere des Rollenantriebs, kann mehrere Getriebestufen umfassen. Das Getriebe der Treibeinrichtung, insbesondere des Rollenantriebs, kann als Umlaufrädergetriebe, insbesondere als Planetengetriebe, ausgebildet sein. Das Umlaufrädergetriebe kann eine oder mehrere Getriebestufen haben. Mehrere Getriebestufen können in der Treibrolle angeordnet sein.

Der Antriebsmotor und das Getriebe der Treibeinrichtung, insbesondere des Rollenantriebs, können parallele Achsen aufweisen. Der Antriebsmotor und der Zwischentrieb können parallele Achsen aufweisen.

Die Bremseinrichtung der Treibeinrichtung, insbesondere des Rollenantriebs, kann innerhalb der Treibrolle angeordnet sein.

Die Erfindung ist in den Zeichnungen beispielhaft und zum Teil schematisch dargestellt. Im Einzelnen zeigen:
- Figur 1:: eine Seitenansicht eines Straßenanhängers mit einem Rangierantrieb und einer Antriebseinheit,
- Figur 2:: eine abgebrochene Draufsicht auf das Anhängerchassis und die Antriebseinheit von Figur 1 und
- Figur 3:: eine abgebrochene Schemadarstellung der Antriebseinheit.

Die Erfindung betrifft eine Antriebseinheit (2) für einen Rangierantrieb (1) eines straßengängigen Fahrzeuganhängers (3) und ein Antriebsverfahren. Die Erfindung betrifft außerdem den Rangierantrieb (1).

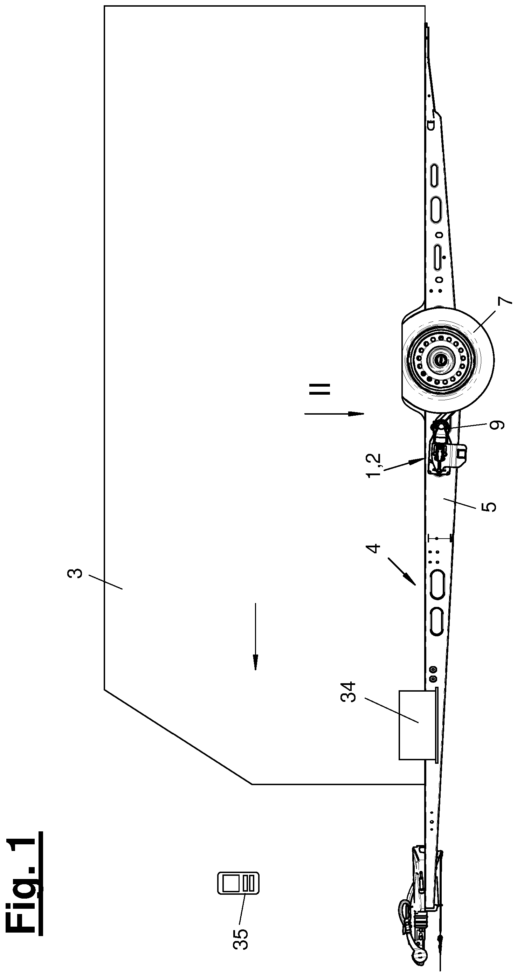

Figur 1 zeigt in einer Seitenansicht den Fahrzeuganhänger (3) mit einer Antriebseinheit (2) eines Rangierantriebs (1).

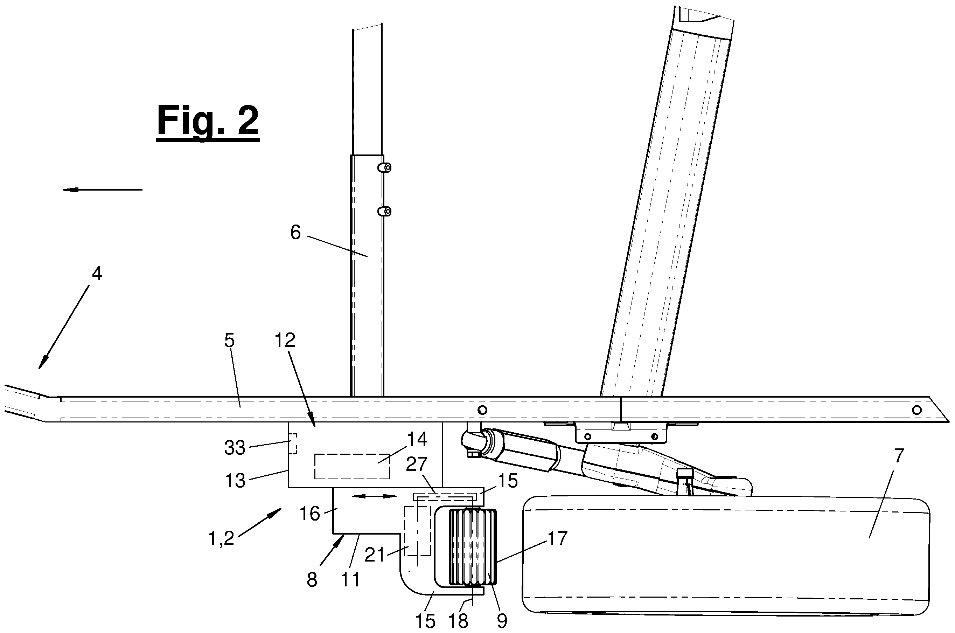

Der Fahrzeuganhänger (3) umfasst einen Chassis (4) mit einer oder mehreren Fahrzeugachsen (36) und beidseitigen Anhängerrädern (7). Die z.B. in Figur 2 abgebrochen dargestellte Fahrzeugachse (36) ist z.B. als Längslenkerachse ausgebildet und umfasst ein über die Anhängerbreite durchgehendes Achsrohr mit endseitigen drehbaren Radlenkern, die am freien Ende jeweils ein Anhängerrad (7) tragen. Die Anhängerachse kann z.B. als gezeigte Längslenkerachse oder als Schräglenkerachse ausgebildet sein. Sie kann auch als Stummelachse oder Halbachse gestaltet sein, die entsprechend mehrfach am Chassis (4) angeordnet ist.

Das Chassis (4) umfasst zwei oder mehr Längsträger (5) mit einer frontseitigen Deichsel und einer am vorderen Deichselende angeordneten Anhängerkupplung. Die Längsträger (5) sind z.B. als dünnwandige und abgekantete Bleche mit einem aufrechten Mittelsteg und einem liegend angeordneten Obergurt und/oder Untergurt ausgebildet. Die ein oder mehreren Fahrzeugachsen (36) sind an den Längsträgern (5) befestigt. Das Chassis (4) kann ferner ein oder mehrere Querträger (6) umfassen. Auf dem Chassis (4) kann ein beliebiger ausgebildeter Aufbau angeordnet sein. Die Vorwärts-Fahrtrichtung des Fahrzeuganhängers (3) ist in Figur 1 und 2 mit einem Pfeil gekennzeichnet.

Der Rangierantrieb (1) umfasst zwei oder mehr Antriebseinheiten (2), die jeweils einem Anhängerrad (7) zugeordnet sind. In der gezeigten Ausführungsform eines einachsigen Fahrzeuganhängers (3) ist ein Paar von zwei Antriebseinheiten (2) vorhanden, die an der linken und der rechten Seite des Chassis (4) angeordnet sind. Bei einem mehrachsigen Fahrzeuganhänger (3), mit z.B. einer Tandemachse, können ein, zwei oder mehr Paare von Antriebseinheiten (2) vorhanden sein.

Die Antriebseinheiten (2) weisen jeweils eine Treibeinrichtung (8) und bevorzugt auch eine Zustelleinrichtung (12) auf.

Die Treibereinrichtung (8) umfasst eine an ein Anhängerrad (7) zustellbare, drehend angetriebene Treibrolle (9), einen beweglichen Rollenträger (11) und einen Rollenantrieb (10), welcher die Treibrolle (9) drehend antreibt. Der Rollenantrieb (10) umfasst einen Antriebsmotor (21) und ein mit der Treibrolle (9) verbundenes Getriebe (23).

Der Antriebsmotor (21) ist z.B. als steuerbarer elektrischer Antriebsmotor, insbesondere Gleichstrommotor, ausgebildet. Er kann auch eine beliebige andere geeignete Ausbildung haben. Die Treibeinrichtung kann einen oder mehrere Antriebsmotoren (21) aufweisen.

Das Getriebe (23) ist vollständig oder zumindest überwiegend innerhalb der Treibrolle (9) in deren hohlem Innenraum (19) angeordnet. Die Zustellung der Treibeinrichtung (8) und insbesondere der Treibrolle (9) an das Anhängerrad (7) erfolgt in der mit Pfeilen gekennzeichneten Zustellrichtung. Die Zustellbewegung und die Zustellrichtung sind bevorzugt translatorisch und insbesondere linear.

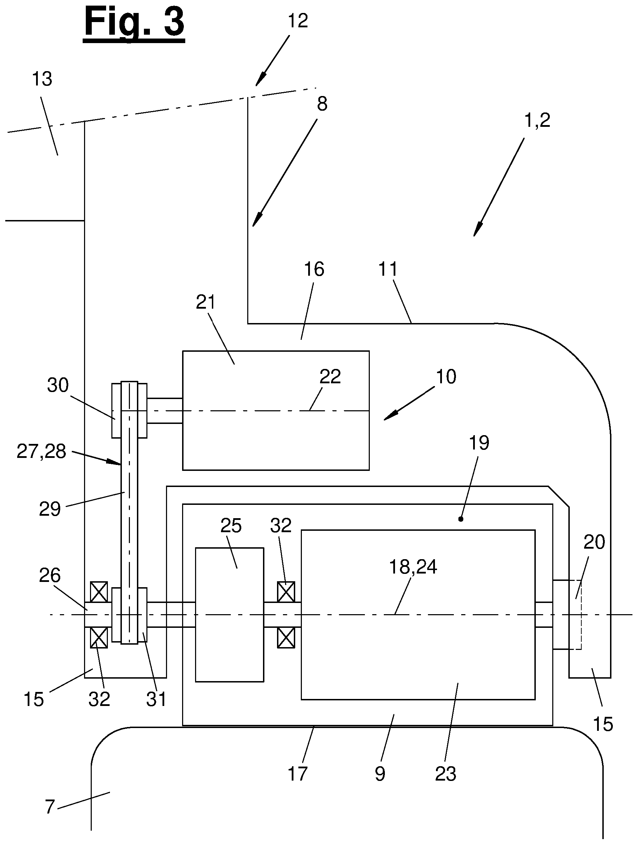

Die Treibeinrichtung (8) und die Treibrolle (9) werden dabei zwischen einer vom Anhängerrad (7) gelösten und zurückgezogenen Ruhestellung gemäß Figur 1 und 2 sowie einer Treibstellung am Fahrzeugrad (7) gemäß Figur 3 hin und her bewegt. In der Treibstellung wird die Treibrolle (9) mit dem Anhängerrad (7) in einen treibfähigen Kontakt gebracht, in dem die Drehbewegung der Treibrolle (9) auf das Anhängerrad (7) übertragen werden kann und dieses entsprechend dreht.

In der gezeigten Ausführungsform wird die Treibrolle (9) gemäß Figur 3 an die Lauffläche eines Luftreifens des Anhängerrads (7) mit Kraft angepresst. Zur Übertragung der Drehbewegung hat die Treibrolle (9) einen in geeigneter Weise ausgebildeten Rollenmantel (17), der z.B. eine treib- und reibgünstige Oberfläche aufweist. Diese kann z.B. von einer axialen Riffelung oder anderen Vorsprüngen und Vertiefungen zur bevorzugt form- und kraftschlüssigen Übertragung der Antriebskräfte und -bewegungen von der rotierenden Treibrolle (9) auf das Anhängerrad (7) ausgebildet sein. Die Treibrolle (9) hat z.B. eine zylindrische Form und rotiert um eine zentrale Rollenachse (18). Die hohle Treibrolle (9) kann an einer Stirnseite offen sein.

Das Getriebe (23) kann eine beliebige Ausgestaltung haben. Es kann einstufig oder mehrstufig ausgebildet sein. In der gezeigten Ausführungsform ist es als Umlaufrädergetriebe, insbesondere als Planetengetriebe, ausgestaltet. Das Getriebe (23) kann eine Getriebeachse (24) haben, die bevorzugt konzentrisch zur Rollenachse (18) angeordnet ist.

Das Getriebe (23) wird eingangsseitig von einer Welle (26) beaufschlagt, an der auch das Eingangsrad, insbesondere Sonnenrad, des Getriebes (23) angeordnet oder ausgebildet sein kann. Die Welle (26) kann mittels Lagern (32) am Rollenträger (11) und in der Treibrolle (9), z.B. in einem trägerfesten Stützrohr, drehbar gelagert und abgestützt sein. Der Abtrieb vom Getriebe (23) auf die Treibrolle (9) kann über einen mit der Treibrolle (9) fest verbundenen Umlaufrollenträger, insbesondere Planetenträger, erfolgen. Ein anderes Teil des Umlaufrädergetriebes, insbesondere Planetengetriebes, z.B. ein Hohlrad, kann am Rollenträger (11) trägerfest und drehfest abgestützt sein. Am Rollenträger (11) kann hierfür ein nicht dargestelltes Stützrohr befestigt sein, welches stirnseitig in die hohle Treibrolle (9) ragt und das Getriebe (23) aufnimmt. Der abtreibende Umlaufrollenträger, insbesondere Planetenträger, kann mit einer Stirnplatte der Treibrolle (9) verbunden sein, die außerdem mit einem benachbarten Rollenlager (20) zur drehbaren Abstützung der Treibrolle (9) gekoppelt ist. Die Treibrolle (9) kann zudem am anderen Ende am Stützrohr drehbar gelagert und abgestützt sein.

Der Rollenträger (11) nimmt einerseits die Treibrolle (9) und das Getriebe (23) und andererseits den Antriebsmotor (21) auf. Der Antriebsmotor (21) ist außerhalb und getrennt sowie mit Distanz, z.B. seitlich versetzt, von der Treibrolle (9) am Rollenträger (11) angeordnet. Der Rollenträger (11) kann ein hohles Trägergehäuse (16) aufweisen, in dessen Innenraum der Antriebsmotor (21) geschützt untergebracht ist.

Der Antriebsmotor (21) treibt die Treibrolle (9) über einen Zwischentrieb (27) an, der einerseits mit dem Antriebsmotor (21) und andererseits mit dem Getriebe (23) gekoppelt ist. Der Zwischentrieb (27) ist ebenfalls am Rollenträger (11), insbesondere im Trägergehäuse (16), und im Wesentlichen außerhalb der Treibrolle (9) angeordnet. Der mit Abstand vom Getriebe (23) am Rollenträger (11) angeordnete Antriebsmotor (21) und das Getriebe (23) haben in der gezeigten Ausführungsform parallele Achsen (22,24), die über den Zwischentrieb (27) treibend miteinander gekoppelt werden.

Der Zwischentrieb ist als Riementrieb (28) ausgebildet. Vorzugsweise ist dies ein formschlüssiger Riementrieb (28), insbesondere ein Zahnriementrieb. Der Riementrieb (28) umfasst ein treibendes Riemenrad bzw. Zahnrad (30) auf der Motorwelle bzw. Motorachse (22) und ein abtreibendes Riemenrad oder Zahnrad (31) auf der Welle (26) bzw. der Getriebeachse (24). Die Riemenräder bzw. Zahnräder (30,31) werden durch einen Riemen (29), insbesondere Zahnriemen, miteinander gekoppelt. Der Zwischentrieb (27) kann ein beliebig geeignetes Übersetzungsverhältnis haben, z.B. eine 1:1-Übersetzung.

Die Treibrolle (9) ist am Rollenträger (11) in einem Freiraum zwischen gabelartigen Trägerarmen (15) aufgenommen. Sie kann über das eine besagte Rollenlager (20) am Rollenträger (11), insbesondere an zumindest einem Trägerarm (15), und ansonsten am Stützrohr drehbar abgestützt sein.

Die Antriebseinheit (2) kann eine steuerbare Bremseinrichtung (25) mit einer Haltefunktion für die Treibrolle (9) umfassen. Die Bremseinrichtung (25) kann in Treibstellung der Treibrolle (9) am Anhängerrad (7) das Anhängerrad (7) blockieren und ein Wegrollen des Fahrzeuganhängers (3) verhindern.

Die Bremseinrichtung (25) ist z.B. zwischen dem Getriebe (23) und dem Zwischentrieb (27) angeordnet. Sie kann sich im hohlen Innenraum (19) der Treibrolle (9), insbesondere innerhalb des Stützrohrs, befinden. Die Bremseinrichtung (25) kann in beliebig geeigneter Weise ausgebildet sein und kann steuerbar sein. Sie kann z.B. als steuerbare Magnetbremse gestaltet sein. Ein Bremselement ist dabei trägerfest und drehfest am Rollenträger (11), insbesondere im Stützrohr, abgestützt und ein anderes Bremselement ist mit der Welle (26) oder der Treibrolle (9) oder einem anderen drehbaren Teil in oder an der Treibrolle (9) fest verbunden. Zwischen der Bremseinrichtung (25) und dem Getriebe (23) kann im Treibrohr (9) ein Lager (32) angeordnet sein. Das Lager (32) kann z.B. im Stützrohr trägerfest abgestützt sein. Das andere Lager (32) der Welle (6) kann abweichend von Figur 3 ebenfalls im Stützrohr angeordnet und trägerfest abgestützt sein.

Die Treibeinrichtung (8) wird von der eingangs genannten Zustelleinrichtung (12) zwischen der Ruhestellung und der Treibstellung am Anhängerrad (7) bevorzugt translatorisch und linear hin und her bewegt. Die Zustelleinrichtung (12) kann in beliebig geeigneter Weise ausgebildet sein und angetrieben werden.

In der gezeigten Ausführungsform umfasst die Zustelleinrichtung (12) eine Konsole und einen eigenen steuerbaren Zustellantrieb (14). Der Zustellantrieb (14) kann z.B. als Elektromotor oder in anderer Weise ausgebildet sein. Der Rollenträger (11) ist bevorzugt linear verstellbar an der Konsole (13) in Zustellrichtung gelagert und ist mit dem Zustellantrieb (14) gekoppelt. Der Zustellantrieb (14) kann in der Konsole (13) und/oder in der Treibeinrichtung (8), insbesondere im oder am Rollenträger (11), angeordnet sein.

Die Konsole (13) kann am Fahrzeuganhänger (3), insbesondere an dessen Chassis (4), in geeigneter Weise befestigt werden. Bei der in Figur 2 gezeigten Ausführungsform ist die Konsole (13) außenseitig an einem aufrechten Mittelsteg des benachbarten Längsträgers (5) angeordnet und befestigt. Zwischen dem Paar von linken und rechten Antriebseinheiten (2) kann ein stützender, bevorzugt teleskopierbarer, Querträger (6) angeordnet sein. Der Querträger (6) kann endseitige Flanschplatten aufweisen, die jeweils an der Innenseite des aufrechten Mittelstegs der Längsträger (5) stützend anliegen und über Schrauben oder andere Befestigungsmittel mit der benachbarten Konsole (13) und dem besagten Mittelsteg fest verbunden werden.

In einer anderen und z.B. in Figur 1 angedeuteten Ausführungsform kann der Querträger (6) an der Unterseite der Längsträger (5) angeordnet und befestigt sein. In einer weiteren Variante kann der Querträger (6) durch Öffnungen in den aufrechten Mittelstegen der Längsträger (5) durchgesteckt sein und hier über Adapterplatten oder dgl. an der umgebenden Mittelstegwand befestigt sein. In beiden Varianten kann der Querträger (6) über die Längsträger (5) nach außen vorstehen und an diesen Bereichen mit jeweils einer Konsole einer Zustelleinrichtung (12) fest verbunden sein.

Die Antriebskomponenten der Antriebseinheit (2), insbesondere der Antriebsmotor (21) und der Zustellantrieb (14), können steuerbar ausgebildet sein. Sie können mit mindestens einer in Figur 1 schematisch dargestellten Steuerung (34) verbunden sein. Dies kann z.B. eine zentrale Steuerung (34) sein, an die mehrere Antriebseinheiten (2) angeschlossen sind. Die Antriebseinheiten (2) können ferner eine nicht dargestellten einteilige oder mehrteilige Sensorik, z.B. Temperatursensoren, Drehzahlsensoren, Kraftsensoren, Wegsensoren und/oder dgl., umfassen. Die Sensorik kann ebenfalls mit der Steuerung (34) verbunden sein.

In einer anderen und nicht dargestellten Variante kann die Steuerung (34) verteilt ausgebildet sein, wobei Steuerkomponenten an jeder Antriebseinheit (2) angeordnet sind und miteinander kommunizieren. Eine dieser Steuerkomponenten kann als Master und die anderen als Slave ausgebildet sein.

Die Antriebseinheiten (2) weisen jeweils eine Kommunikationsschnittstelle (33) auf. Diese kann zur Kommunikation mit der mindestens einen Steuerung (34) dienen und ausgebildet sein. Über die Kommunikationsschnittstellen (33) können auch die Antriebseinheiten (2) untereinander kommunizieren. Ferner ist eine Kommunikation mit einer bevorzugt mobilen Fernbedienung (35) des Rangierantriebs (1) möglich. Die Fernbedienung (35) und die mindestens eine Steuerung (34) haben ebenfalls geeignete Kommunikationsschnittstellen (33'). Die Kommunikation zwischen den besagten Kommunikationsschnittstellen (33,33') kann leitungsgebunden und/oder drahtlos, z.B. per Funk, Bluetooth, Infrarot oder dgl. erfolgen.

Der Rangierantrieb (1) kann außerdem eine nicht dargestellte eigene Energieversorgung, insbesondere einen elektrischen Akku, umfassen. Der Rangierantrieb (1) kann auch an eine anhängerseitige Energieversorgung, insbesondere einen elektrischen Akku, angeschlossen sein.

### BEZUGSZEICHENLISTE

- 1: Rangierantrieb
- 2: Antriebseinheit
- 3: straßengängiger Fahrzeuganhänger
- 4: Chassis
- 5: Längsträger
- 6: Querträger
- 7: Anhängerrad
- 8: Treibeinrichtung
- 9: Treibrolle
- 10: Rollenantrieb
- 11: Rollenträger
- 12: Zustelleinrichtung
- 13: Konsole
- 14: Zustellantrieb
- 15: Trägerarm
- 16: Trägergehäuse
- 17: Rollenmantel
- 18: Rollenachse
- 19: Innenraum
- 20: Rollenlager
- 21: Antriebsmotor
- 22: Achse, Motorachse
- 23: Getriebe, Planetengetriebe
- 24: Achse, Getriebeachse
- 25: Bremseinrichtung
- 26: Welle
- 27: Zwischentrieb
- 28: Riementrieb
- 29: Zahnriemen
- 30: Zahnrad
- 31: Zahnrad
- 32: Lager
- 33: Kommunikationsschnittstelle
- 33': Kommunikationsschnittstelle
- 34: Steuerung
- 35: Fernbedienung
- 36: Fahrzeugachse

## Patentansprüche

1. Antriebseinheit für einen Rangierantrieb (1) eines straßengängigen Fahrzeuganhängers (3), wobei die Antriebseinheit (2) eine Treibeinrichtung (8) aufweist, welche ein an ein Anhängerrad (7) des Fahrzeuganhängers (3) zustellbare, drehend angetriebene Treibrolle (9), einen beweglichen Rollenträger (11) und einen Rollenantrieb (10) umfasst, wobei der Rollenantrieb (10) einen Antriebsmotor (21) und ein mit der Treibrolle (9) verbundenes sowie vollständig oder zumindest überwiegend innerhalb der Treibrolle (9) angeordnetes Getriebe (23) aufweist, **dadurch gekennzeichnet, dass** der Antriebsmotor (21) außerhalb und getrennt von der Treibrolle (9) angeordnet ist und die Treibrolle (9) über einen mit dem Getriebe (23) gekoppelten Zwischentrieb (27) antreibt.

2. Antriebseinheit nach Anspruch 1, **dadurch gekennzeichnet, dass** das Getriebe (23) mehrere Getriebestufen umfasst und/oder das Getriebe (23) als Umlaufrädergetriebe, insbesondere als Planetengetriebe, ausgebildet ist.

3. Antriebseinheit nach Anspruch 1 oder 2, **dadurch gekennzeichnet, dass** der Antriebsmotor (21) mit Abstand vom Getriebe (23) am Rollenträger (11) angeordnet ist.

4. Antriebseinheit nach Anspruch 1, 2 oder 3, **dadurch gekennzeichnet, dass** der Zwischentrieb (27) am Rollenträger (11) und im Wesentlichen außerhalb der Treibrolle (9) angeordnet ist, wobei vorzugsweise der Zwischentrieb (27) als Riementrieb, bevorzugt formschlüssiger Riementrieb (28), insbesondere Zahnriementrieb, ausgebildet ist.

5. Antriebseinheit nach einem der vorhergehenden Ansprüche, **dadurch gekennzeichnet, dass** die Antriebseinheit (2) eine steuerbare Bremseinrichtung (25) mit einer Haltefunktion für die Treibrolle (9) aufweist, wobei bevorzugt die Bremseinrichtung (25) zwischen dem Getriebe (23) und dem Zwischentrieb (27) angeordnet ist.

6. Antriebseinheit nach einem der vorhergehenden Ansprüche, **dadurch gekennzeichnet, dass** die Treibrolle (9) über zumindest ein Rollenlager (20) am Rollenträger (11) gelagert ist.

7. Antriebseinheit nach einem der vorhergehenden Ansprüche, **dadurch gekennzeichnet, dass** der Rollenträger (11) eine hohles Trägergehäuse (16) umfasst, in dem der Antriebsmotor (21) und bevorzugt der Zwischentrieb (27) angeordnet ist.

8. Antriebseinheit nach einem der vorhergehenden Ansprüche, **dadurch gekennzeichnet, dass** der Rollenträger (11) gabelartige Trägerarme (15) umfasst, zwischen denen die Treibrolle (9) angeordnet ist.

9. Antriebseinheit nach einem der vorhergehenden Ansprüche, **dadurch gekennzeichnet, dass** die Antriebseinheit (2) eine bevorzugt lineare Zustelleinrichtung (12) umfasst, die dazu ausgebildet ist, die Treibeinrichtung (8) zu bewegen und an das Anhängerrad (7) zuzustellen.

10. Antriebseinheit nach einem der vorhergehenden Ansprüche, **dadurch gekennzeichnet, dass** die Zustelleinrichtung (12) eine Konsole (13) und einen bevorzugt eigenen Zustellantrieb (14) umfasst, wobei der Rollenträger (11) bevorzugt linear verstellbar an der Konsole (13) gelagert und mit dem Zustellantrieb (14) gekoppelt ist, wobei die Konsole (13) dazu ausgebildet ist, am Fahrzeuganhänger (3), insbesondere an dessen Chassis (4), bevorzugt an einem Längsträger (5) und/oder an einem Querträger (6), befestigt zu werden.

11. Antriebseinheit nach einem der vorhergehenden Ansprüche, **dadurch gekennzeichnet, dass** die Antriebseinheit (2) eine Kommunikationsschnittstelle (33) aufweist, die zur Kommunikation mit mindestens einer Steuerung (34) und/oder einer bevorzugt mobilen Fernbedienung (35) des Rangierantriebs (1) ausgebildet ist.

12. Rangierantrieb für einen straßengängigen Fahrzeuganhänger (3), wobei der Rangierantrieb (1) mehrere an ein Anhängerrad (7) des Fahrzeuganhängers (3) zustellbare Antriebseinheiten (2) umfasst, **dadurch gekennzeichnet, dass** die Antriebseinheiten (2) nach einem der Ansprüche 1 bis 11 ausgebildet sind.

13. Rangierantrieb nach Anspruch 12, **dadurch gekennzeichnet, dass** der Rangierantrieb (1) zumindest eine Steuerung (34) aufweist.

14. Rangierantrieb nach Anspruch 12 oder 13, **dadurch gekennzeichnet, dass** der Rangierantrieb (1) eine mit der zumindest einen Steuerung (34) bevorzugt drahtlos kommunizierende Fernbedienung (35) aufweist.

15. Verfahren zum Antreiben eines Anhängerrads (7) eines straßengängigen Fahrzeuganhängers (3) mittels einer Antriebseinheit (2) eines Rangierantriebs (1), wobei die Antriebseinheit (2) eine Treibeinrichtung (8) aufweist, welche ein an das Anhängerrad (7) zustellbare, drehend angetriebene Treibrolle (9), einen beweglichen Rollenträger (11) und einen Rollenantrieb (10) umfasst, wobei der Rollenantrieb (10) einen Antriebsmotor (21) und ein mit der Treibrolle (9) verbundenes sowie vollständig oder zumindest überwiegend innerhalb der Treibrolle (9) angeordnetes Getriebe (23) aufweist, **dadurch gekennzeichnet, dass** der Antriebsmotor (21) außerhalb und getrennt von der Treibrolle (9) angeordnet wird und die Treibrolle (9) über einen mit dem Getriebe (23) gekoppelten Zwischentrieb (27) antreibt.
